# EUROPEAN PATENT SPECIFICATION

(11) **EP 1 291 166 B1**
(45) Date of publication and mention of the grant of the patent: **01.06.2005**
(21) Application number: 02256152.6
(22) Date of filing: 04.09.2002
(51) Int. Cl.: B32B 27/12, B32B 27/08, B32B 27/32

(54) **A process of manufacturing a laminated sheet**
Verfahren zur Herstellung einer Verbundfolie
Procédé de fabrication d'une feuille laminée

(30) Priority: 07.09.2001 JP 2001272521; 07.09.2001 JP 2001272530
(43) Date of publication of application: 12.03.2003
(73) Proprietor: MITSUI CHEMICALS, INC., Tokyo (JP)
(72) Inventor: Ohwada, Hiroki, c/o Mitsui Chemicals, Inc., Ichihara-shi, Chiba 299-0108 (JP); Hagio, Hidenori, c/o Mitsui Chemicals, Inc., Ichihara-shi, Chiba 299-0108 (JP); Masuda, Kazuhiko, c/o Mitsui Chemicals, Inc., Ichihara-shi, Chiba 299-0108 (JP)
(74) Representative: Cresswell, Thomas Anthony

(56) References cited:
- EP-A- 0 982 431
- EP-A- 1 022 125
- WO-A-94/20298
- WO-A-96/19346
- WO-A-99/29499
- US-A- 5 035 941
- DATABASE WPI Section Ch, Week 198536 Derwent Publications Ltd., London, GB; Class A32, AN 1985-221156 XP002223122 & JP 60 143933 A (TOYO SODA MFG CO LTD), 30 July 1985 (1985-07-30)
- PATENT ABSTRACTS OF JAPAN vol. 014, no. 083 (M-0936), 16 February 1990 (1990-02-16) & JP 01 299017 A (SHOWA DENKO KK), 1 December 1989 (1989-12-01)

## Description

### Background of the Invention

### 1. Field of the Invention

The present invention relates to a process of manufacturing a laminated sheet by laminating a non-woven fabric and a polyolefin film that has cloth-like texture. More specifically, the present invention relates to a process of manufacturing a laminated sheet which has air permeability and liquid impermeability in addition to the cloth-like texture, or a cloth-like sheet having good stretch .

### 2. Description of the Background

Two-layered sheets have been manufactured by laminating thermoplastic polymeric film onto non-woven fabric. Such two-layered sheets have been utilized in a wide variety of industrial fields as packaging materials, personal hygiene products such as diapers, sanitary napkins, and construction and building materials such as waterproof sheets. The physical properties of these sheets have attracted attention of interested parties.

EP-A-1022125 describes a water-vapour-permeable non-woven fabric laminate comprising a layer of non-woven fabric (A) made of an olefin polymer and a layer of elastomer (B) having water-vapour-permeability which are laminated through a layer of ethylene polymer (C) containing a polar group.

US-A-5035941, EP-A-0982431 and JP-A-01299017 all discuss laminates produced by coextrusion lamination.

WO-A-9619346 concerns a multilayer film which may be attached to a support layer such as a fibrous non-woven web.

WO-A-9929499, WO-A-9420298 and JP-A-60143933 are also relevant as background art to the present invention. The reason for using the two-layered sheet is to make use of the properties inherent to the non-woven fabric and polymeric film, respectively. Extrusion lamination is widely used to produce the two-layered sheet due to its production stability and good economy. However, laminating thermoplastic resin onto the surface of non-woven fabric which has innumerous openings is apt to allow the molten resin to deeply penetrate into spaces between the fibers. As a result, the cloth-like texture inherent to the non-woven fabric is lost, and stretch of polymeric film is impaired, and pinholes tend to be formed in the polymeric film layer. For said reason, the properties of the respective layers are not effectively used. There is a recognized need to further enhance the physical properties of such sheet by improving the manufacturing method.

### Summary of the Invention

Accordingly it is an object of the present invention to provide a process of manufacturing a laminated sheet which is water vapor permeable, liquid-impermeable, and retains cloth-like texture inherent to the non-woven fabric .

It is another object of the present invention to provide a process of manufacturing a laminated sheet having cloth-like texture inherent to the non-woven fabric, which additionally possesses the stretch inherent to the polymeric film .

Other and further objects, features and advantages of the present invention will appear more fully from the following description.

The present invention relates to a process of manufacturing a laminated sheet, which comprises of a first step of forming a two-layered laminate by extruding molten polyolefin through a flat die at a temperature underneath the die of 200 to 280 °C onto a surface of a non-woven fabric and passing the two layers through the gap in a pair of rolls consisting of a nip roll and a chill roll under such condition that a nip roll pressure is controlled at 5 to 20 kg/cm so as to integrate the non-woven fabric layer and the polyolefin layer having a basis weight of 5 to 50 g/m² into a two-layered laminate, and a second step of forming a three-layered laminate by extruding the same or a different polyolefin onto the polyolefin layer so that the polyolefin layers have an overall basis weight of 10 to 60 g/m².

. It is a preferred mode of embodiment of said laminated sheet, wherein the laminate is drawn at least in one direction and has hydrostatic head of 1,000 mm H₂O or more and water vapor transmission rate (WVTR) of 1,000 to 6,000 g/m²/24 hr.

There can be cited as another preferred mode of embodiment of said laminated sheet, wherein the laminate has an elongation at break of 200 to 1,000 % in a transverse direction and a tensile strength of 5 to 30 N/cm in a transverse direction.

It is preferable that said non-woven fabric layer is a spunbonded non-woven fabric or a laminated non-woven fabric constructed of a spunbonded non-woven fabric and a melt-blown non-woven fabric, has its mass per unit area (hereinafter referred to as "basis weight" ) of 10 to 60 g/m², and is produced from polyolefin, respectively.

The polyolefin layers have an overall basis weight of 10 to 60 g/m², while the basis weight of the polyolefin layer formed at the first step included in said polymeric film layers is 5 to 50 g/m². As regards the polyolefin layers, at least one of its layers may contain inorganic filler. In such case, it is preferable that the inorganic filler content is in a range of 20 to 70 % by weight. It is preferable that The molten polyolefin of the first step comprises an ethylene-α-olefin copolymer. It is preferable that the polyolefin layer formed at the first step is produced from a polyolefin having a density of 0.870 to 0.935 g/cm³, a melt flow rate (MFR) of 1 to 90 g/10 min., and a melt tension (MT) of 0.5 to 10 g.

It is preferable that such laminate is drawn by 1.1 to 5 times in at least one direction.

The present invention relates to a method for manufacturing a laminated sheet, which comprises a first step in which a two-layered laminate is formed by extruding molten polyolefin through a flat die at a temperature underneath the die of 200 to 280 °C, onto a surface of a non-woven fabric and thereupon integrating the non-woven fabric layer and the polyolefin layer having a basis weight of 5 to 50 g/m² into a two-layered laminate by means of passing said two layers through a gap in a pair of rolls consisting of a nip roll and a chill roll under such condition that a nip pressure is controlled at 5 to 20 kg/cm, and a second step of forming a three-layered laminate by extruding the same type or a different type of polyolefin onto the polyolefin layer so that the polyolefin layers have an overall basis weight of 10 to 60 g/m².

It is preferable that the non-woven fabric is fed at tension of 0.1 to 5 kg/m in a machine direction. Said polyolefin layers may contain inorganic filler in at least one of its layers, and it is preferable that the inorganic filler content is in a range of 20 to 70 % by weight. On top of aforesaid manufacturing method there may be further comprising a drawing step of the obtained laminate in at least one direction, in which case the drawing step is preferably executed by feeding the laminate to a gear stretch equipment.

Next, explanation is made on preferred modes of embodiment of the present invention in two parts as follows.

The first mode of embodiment relates to a process of manufactuing a laminated sheet, which comprises a laminate formed by joining at least two layers of polyolefin to a non-woven fabric wherein the polyolefin layers contain inorganic filler and part of the polyolefin layer contacting the non-woven fabric layer penetrates into spaces between the fibers of the non-woven fabric.

It is preferable that aforesaid laminate is drawn in at least one direction and has hydrostatic head of 1,000 mm H₂O and a water vapor transmission rate (WVTR) of 1,000 to 6,000 g/m²/24 hr.

The preferred breakdown of the total thickness of the laminated sheet is 10 to 60 g/m² for the non-woven fabric layer and 10 to 60 g/m², for the polyolefin layers, while the thickness of the polyolefin layer contacting the non-woven fabric layer included in said polyolefin layers is 5 to 50 g/m².

Preferred types of non-woven fabric are spunbonded fabrics and laminated non-woven fabrics obtained by laminating a melt-blown non-woven fabric over a spunbonded non-woven fabric. It is preferable that the non-woven fabric is produced from polyolefin. In particular, suitable for the polyolefin layer to contact the non-woven fabric layer is a polyolefin having a density of 0.870 to 0.935 (g/cm³), a melt flow rate (MFR) of 1 to 90 (g/10 min.), and a melt tension (MT) of 0.5 to 10 (g). One example of such polyolefin is polyolefin comprising an ethylene-α-olefin copolymer. It is preferable that the polyolefin layer contains inorganic filler by 20 to 70 % by weight.

The present invention also relates to a method for manufacturing a laminated sheet, which comprises of a first step in which a two-layer laminate is formed by extruding molten polyolefin including inorganic filler through a flat die at temperature underneath the die of 200 to 280 °C onto a surface of a non-woven fabric, and thereupon integrating the non-woven fabric layer and the polyolefin layer having a basis weight of 5 to 50g/m² into a two-layered laminate by means of passing said two layers through a gap in a pair of rolls consisting of a nip roll and a chill roll under such condition that a nip pressure is controlled at 5 to 20 kg/cm, and a second step of forming a three-layered laminate by extruding a polyolefin containing an inorganic filler onto said polyolefin layer so that the polyolefin layers have an overall basis weight of 10 to 60g/m². As to aforesaid first step, it is preferable that the non-woven fabric is fed at tension of 0.1 to 5 (kg/m) in the machine direction.

According to the present invention, it is preferable that gear stretch equipment is employed for the drawing step in complying with the method for manufacturing laminated sheet to which a third step further comprising drawing the laminate in at least one direction is added.

The second mode of embodiment of the present invention relates to a process of manufacturing a laminated sheet, which comprises a laminate formed by joining at least two layers of polyolefin to a non-woven fabric, wherein part of its polyolefin layer contacting the non-woven fabric layer penetrates into spaces between the fibers of the non-woven fabric, and has an elongation at break of 200 to 1,000 % in a transverse direction of the laminate and a tensile strength of 5 to 30 N/cm in a transverse direction.

The preferred breakdown of the total thickness of the laminated sheet is 10 to 60 g/m² for the non-woven fabric layer and 30 to 60 g/m² for the polyolefin layers, while a thickness of the polyolefin layer contacting the non-woven fabric layer included in said polyolefin layers is 5 to 40 g/m².

Preferred types of non-woven fabric are spunbonded non-woven fabrics or laminated non-woven fabrics obtained by laminating a melt-blown non-woven fabric over a spunbonded non-woven fabric. It is preferable that the non-woven fabric is produced from polyolefin. Particularly preferred for the polyolefin layer contacting the non-woven fabric layer is a resin having a density of 0.870 to 0.935 g/cm³, a melt flow rate (MFR) of 1 to 90 g/10 min., and a melt tension (MT) of 0.1 to 10 g. One example is polyolefin comprising an ethylene-α-olefin copolymer. It is preferable that at least one among all layers of the polyolefin layers excluding the first layer is produced from a polyolefin containing inorganic filler by 20 to 70 % by weight.

The present invention also relates to a method for manufacturing a laminated sheet, whose elongation at break is 200 to 1,000 % in its transverse direction and tensile strength is 5 to 30 N/cm in its transverse direction, comprising a first step in which a two-layered laminate is formed by extruding molten polyolefin through a flat die at temperature underneath the die of 200 to 280 °C onto a non-woven fabric and thereupon integrating the non-woven fabric layer and the polyolefin layer having a basis weight of 5 to 50g/m² into a two-layered laminate by means of passing aforesaid two layers through a gap in a pair of rolls consisting of a nip roll and a chill roll under such condition that a nip pressure is controlled at 5 to 20 kg/cm and a second step of forming a three-layered laminate by extruding another polyolefin layer onto aforesaid polyolefin layer so that the polyolefin layers have an overall basis weight of 10 to 60 g/m².

As to aforesaid first step, it is preferable that the non-woven fabric is fed at tension of 0.1 to 5 (kg/m) in a machine direction. As to aforesaid second step, it is preferable that the extrusion lamination is executed using the same type of polyolefin as used in the first step. It is furthermore preferable that at least one layer among aforesaid polyolefin layers contains inorganic filler at 20 to 70 % by weight.

### Detailed Description of the Preferred Embodiments

The present invention is explained in detail in the sequence of a structure of laminate and manufacturing steps as follows.

### Laminated Sheet

The laminated sheet produced by the process of the present invention has the structure of a laminate in which a non-woven fabric is joined to a polyolefin constructed of at least two layers and part of the polyolefin layer contacting the non-woven fabric layer penetrates into spaces between the fibers of the non-woven fabric to combine the two layers into an integrated body.

The thickness of the respective layers expressed in terms of the mass per unit area, namely, basis weight, are preferably 10 to 60 g/m², and more preferably 15 to 40 g/m² for the non-woven fabric layer and 10 to 60 g/m² and more preferably 15 to 55 g/m² for the polyolefin layers as a whole. Insofar as the thicknesses of the respective layers stand within aforesaid ranges any resulting sheet imparts sufficient mechanical strength required of a sheet to serve normal uses, exhibits cloth-like texture in the form of a thin and soft sheet, imparts good hydrostatic head and air permeability, and imparts comfortable fit for other object.

Meanwhile, the polyolefin layers are constructed of at least two layers of which the layer contacting the non-woven fabric layer has a basis weight of 5 to 50 g/m², and preferably 5 to 35 g/m², and more preferably 10 to 25 g/m² more preferably 5 to 25 g/m². Insofar as the total thickness of the polyolefin layers and the breakdown by all layers stand within aforesaid ranges the resulting sheet imparts enhanced flexibility and stretch as a laminated sheet and enhanced cloth-like texture inherent to the non-woven fabric by itself, such as soft, lofty touch.

It is an essential consideration for the laminated sheet of the present invention that the required thickness of the polyolefin layers is fulfilled by separately forming two or more layers. In this connection, it is preferable that the first polyolefin layer contacting the non-woven fabric layer is made as thin as possible to the extent that its thickness is either equivalent to or thinner than that of the second and any ensuing polyolefin layer(s). So long as the required thickness of the polyolefin layer is fulfilled by a single layer alone, the obtained laminated sheet is stiff and can hardly have flexibility and cloth-like texture.

Usable as the non-woven fabric is any non-woven fabric produced from short fiber, long fiber or continuous filament. Usable types of raw material are polyolefin such as polyethylene and polypropylene, polyester such as poly(ethylene terephthalate), polyamide such as nylon-6 and nylon-6,6, and there is no particular limitation to the choice of said materials. Conjugate fibers (bicomponent fibers) of the sheath and core type or the side-by-side type produced from polyethylene or polypropylene are usable, too. Fiber-to-fiber bond may be achieved either by heat bonding or by adhesive.

Usable for aforesaid purpose are non-woven fabrics manufactured in accordance with a dry process, a wet process, a spunbond process or a melt-blown process. Above all, non-woven fabrics manufactured from polypropylene in accordance with the spunbond process or laminated non-woven fabrics obtained by laminating the melt-blown non-woven fabric onto the spunbonded non-woven fabric are suitable for the manufacture of the laminated sheet used for packaging materials and personal hygiene applications due to their properties, i.e. high tensile strength and a high water vapor transmission rate and, furthermore, hydrophobic characteristic.

The polyolefin layers are produced from the thermoplastic synthetic resin polyolefin. The polyolefin may be an olefin homopolymer or a copolymer produced from olefin and a comonomer. Furthermore, it may be a blend of said two materials. There is no particular limitation to the choice of said materials. There can be cited as examples of usable polyolefins polyethylene, polypropylene, ethylene-vinyl acetate copolymer and ethylene-methacrylic acid copolymer. Among the cited materials, a polyolefin adaptive to good adhesion with non-woven fabric is preferred.

It is preferable that the polyolefin layer to contact the non-woven fabric layer is produced from a polyolefin resin which falls in the following respective ranges of density, melt flow rate (MFR), and melt tension (MT). The density range is preferably 0.870 to 0.935 (g/cm³), or more preferably 0.870 to 0.920 (g/cm³), or furthermore preferably 0.870 to 0.910 (g/cm³). The range of MFR as measured at a temperature of 190°C and under a load of 2.16 kg in accordance with ASTM D-1238 is preferably 1 to 90 (g/10 min.),or more preferably 3 to 35 (g/10 min.). The MT range is preferably 0.1 to 10 (g), more preferably 0.5 to 10 (g), or furthermore preferably 0.5 to 8 (g). Polyolefin resin falling in said ranges of physical properties exhibits good extrusion lamination processability by its adequate melt viscosity, and imparts flexibility to the obtained laminated sheet.

Melt tension (MT) as referred to in this connection conforms values determined using a melt tension testing apparatus (manufactured by Toyo Precision Machine Manufacturing Company) under conditions of a nozzle diameter of 2.09 mm, a nozzle length of 8 mm, a resin temperature of 190°C, an extrusion speed of 15 m/min., and a take-up speed of 10 to 20 m/min.

One example of such preferred polyolefin is a resin fulfilling said physical properties which is a copolymer produced from ethylene and an α-olefin having 3 to 20 carbon atoms, the latter of which being contained by 0.1 to 10 mol. %. As examples of such α-olefin, there can be cited propylene, 1-butene, 4-methyl-1-pentene, 1-hexene, and 1-octene. The copolymer may be blended with high pressure-method low density polyethylene or elastomers. Insofar as such polyolefin is used, laminated sheets having high elongation at break and high tensile strength may be readily produced.

It is a requisite condition for the present invention that the polyolefin layers are comprised of at least two layers. A kind of polyolefin to constitute the layers may be the same type or of different types with each other. It is, however, preferable that such combination be adopted that achieves strong adhesion to each other. The polyolefin layer to contact the non-woven fabric layer is produced from polyethylene, particularly the ethylene-α-olefin copolymer with a view to achieving good adhesion to the non-woven fabric layer and flexibility which is a requisite condition for the laminated sheet. It is preferable that the polyolefin layer to constitute a second layer and the ensuing layer(s) (if there is any such layer) be produced from polyethylene likewise since such polyethylene gives good adhesion to each other.

The polyolefin that constitutes the polyolefin layers may or may not contain inorganic filler. In order to obtain polyolefin having good air permeability and high hydrostatic head, it is desirable that all polyolefin layers contain inorganic filler because high air permeability may be achieved along with the drawing process which will be mentioned later. In cases where polyolefin having good stretch are to be obtained, inorganic filler is not necessarily contained.

As the usable inorganic filler, such inorganic substance conventionally used as an additive in the plastic industry as silica, calcium carbonate and magnesium hydroxide may be used. Such inorganic filler may be contained in the polyolefin at preferably 20 to 70 % by weight, and more preferably 50 to 65 % by weight. So long as inorganic filler is contained by a quantity falling in said ranges, the resulting laminated sheet gives a soft touch and the rattle noise made when the laminated sheet is handled, is eliminated.

In cases where high air permeability is sought for the laminated sheet, it is preferable that the laminate as a whole is drawn at least in one direction and preferably in the transverse direction, additionally to the mode of layer composition as explained in the foregoing. The drawing ratio is preferably 1.1 to 5 times, and more preferably 1.1 to 3 times. It is by means of such drawing treatment that the laminated sheet may have its air permeability increased and may acquire flexibility. The laminate as a whole may be drawn in both the machine and transverse directions. It is not a requisite condition that the drawing be made evenly in both directions. For instance, it may be drawn more intensively in the transverse direction and less intensively in the machine direction. For the purpose of defining the direction as referred to herein, the direction to which the in-process laminated sheet is forwarded along the flow of fabrication is defined to be "machine direction" and the direction assuming a right angle to the machine direction is defined to be "transverse direction".

The polymer phase and the inorganic filler phase are separated within the polyolefin layer that contains inorganic filler by this drawing process. In consequence, innumerous micro voids are formed. It is inferred that interconnection of these voids gives air permeability of the polyolefin layer containing such voids.

There can be cited as a mode of embodiment of this process of manufacturing a laminated sheet a sheet having hydrostatic head of preferably 1,000 mm H₂O or more and a water vapor transmission rate of 1,000 to 6,000 g/m²/24 hr, and more preferably 2,500 to 6,000 g/m²/24 hr. Such laminated sheet possesses liquid impermeability while retaining air permeability.

The hydrostatic head as used herein conforms to the value determined in accordance with JIS-L1092 (Method A) and the water vapor transmission rate (WVTR) conforms to that of ASTM E-96. Typically, a laminate constructed of non-woven fabric and one layer of polymeric film has its hydrostatic head deteriorated upon formation of pinholes. Nevertheless, in the present invention, liquid impermeability and air permeability that are mutually contradicting properties of the laminated sheet may be enhanced as the result of the adoption of the two-layer structure for the polyolefin.

Said laminated sheet is suitable for uses as packaging materials and personal hygiene products, because it possesses both liquid impermeability and air permeability and also it, being a relatively thin sheet, possesses cloth-like texture and flexibility as is obviously seen from said thickness of the laminate. In particular, the laminated sheet produced by the process of the present invention is suitable typically for the outer cover of diaper that requires high hydrostatic head and high water vapor transmission rate.

As another mode of embodiment of the process of manufacturing a laminated sheet, there can be cited a sheet having an elongation at break of preferably 200 to 1,000 % in the transverse direction as determined by a tensile test, and more preferably 300 to 900 %, and a tensile strength of 5 to 30 N/cm, and more preferably 8 to 25 N/cm in the transverse direction.

. The aforesaid tensile test was performed on 25 mm-wide specimens using Model 1201 tensile tester manufactured by INTESCO Company under conditions of a gage length of 100 mm and a crosshead speed of 100 mm/min. For the purpose of defining the direction, the flow direction of the laminated sheet fabrication is defined to be "machine direction" and the direction assuming a right angle to the machine direction is defined to be "transverse direction".

Insofar as the elongation at break and tensile strength remain within said ranges, the cloth-like texture inherent to the non-woven fabric which is expressed by such terms as soft touch, loftiness remains intact in the laminated sheet, and stretch inherent to the polyolefin also remains in the laminated sheet. In cases where a polyolefin layer is formed with only one layer in order to achieve the same thickness as that of the polyolefin layers of the present invention, which are formed with at least two layers, the elongation at break of such laminated sheet falls short of the said range, and consequently cloth-like texture cannot be achieved.

Because such laminated sheet is relatively thin as can be obviously seen from said requisite thickness ranges and imparts cloth-like texture and flexibility, it is suitable for uses as packaging materials and personal hygiene products. It is particularly suitable for the stretch materials of diaper that require high elongation at break and high tensile strength.

### Method for Manufacturing Laminated Sheet

The method for manufacturing the laminated sheet of the present invention comprises a first step in which a laminate is formed by extruding molten polyolefin onto a non-woven fabric layer and thereupon passing said two layers through a gap in a pair of rolls consisting of a nip roll and a chill roll, and a second step in which another polyolefin layer is extruded onto said polyolefin layer.

The laminator utilized to manufacture the laminate is comprised basically of at least an extruder equipped with a flat die or T-die and a pair of rolls consisting of a chill roll and a nip roll. It is preferable that the non-woven fabric fed to the laminator substantially free of tension in the machine direction, preferably under a tension of 0.1 to 5 kg/m. Insofar as the non-woven fabric is fed to the laminator virtually free of tension as such, wrinkles do not occur in the non-woven fabric layer of the laminated sheet and the obtained laminated sheet exhibits good appearance.

The temperature of the molten polyolefin extruded through the flat die is controlled at within the range of 200 to 280°C, and preferably 200 to 250°C as measured in the molten polyolefin immediately outside of the die, that is to say, temperature underneath the die. The temperature is to be controlled at somewhat lower than the resin temperature that applies to typical extrusion lamination operation. Insofar as the temperature underneath the die stays within said ranges, the obtained laminated sheet retains the cloth-like texture inherent to the non-woven fabric.

The non-woven fabric and the molten polyolefin layer extruded onto the surface of the non-woven fabric layer are subsequently forwarded to the gap in a pair of rolls consisting of a chill roll and a nip roll, and the two layers are combined under a nip pressure into an integrated body and thus formed into a cooled laminate. The nip pressure is controlled at a level where the molten polyolefin penetrates slightly into the non-woven fabric layer. Specifically, the nip pressure is controlled at 5 to 20 kg/cm, and preferably 7 to 18 kg/cm. Even though the nip pressure is controlled at within such a low pressure, the non-woven fabric layer and the polyolefin layer are joined to each other into an integrated body with no pinholes in the polyolefin layer, and the resulting laminate retains the cloth-like texture inherent to the non-woven fabric.

Thereupon, the manufacturing operation proceeds to a second step in which a second polyolefin layer is extruded onto the surface of the first polyolefin layer which has been formed on the surface of the non-woven fabric layer in the previous step. The polyolefin layer which is to provide an additional coat may be a film of the same type as the first polyolefin layer or may be of a different material.

Said second step is executed according to extrusion lamination in the same manner as in the previous step, In case of the extrusion lamination, for which the same polyolefin as used for the first polyolefin layer is used, laminated sheets having good physical properties may be manufactured at high productivity rates.

The laminate thus obtained is, insofar as necessary, sent to a drawing or stretching process wherein the laminate is drawn in at least one direction. This drawing process gives the laminated sheet air permeability.

The drawing equipment may be of the conventional type for drawing or stretching the laminate in the machine and/or transverse direction(s), or so-called 'gear stretch equipment'. The ratio of drawing is preferably 1.1 to 5 times, and more preferably 1.1 to 3 times. The drawing may be executed successively after each method in the laminate manufacture, or may be executed independently after the laminate manufacture has been completed.

The gear stretch equipment is composed of a pair of intermeshing rolls on whose surfaces are disposed and fixed at even intervals large numbers of disks. Each roll rotates in opposite directions, and the disks are so designed that they are set at certain depths sufficient to keep them from contacting their opposite disks while in motion. When the laminate is fed into the gap in the rolls, the laminate is caught into the troughs between the disks on one roll and the disks on the other, while the disks on the two rolls rotate in opposite directions. The laminate while it is being caught between the rolls is drawn in the transverse and/or machine direction(s). When this gear stretch equipment is operated, the laminate is drawn principally in the transverse direction. However, by means of varying conditions of the equipment, such as the configuration, the depth, etc. of the gear, and operating conditions such as the laminate feeding speed and the roll rotation speed, etc., the ratio of drawing for the laminate in the respective directions can be controlled.

According to the present invention, the first polyolefin layer is formed under the aforementioned extrusion lamination conditions and the polyolefin layers of the second and ensuing layer(s) are coated over the first polyolefin layer. The consequence of said fabrication steps is that the requisite thickness of the polyolefin layer is achieved via two or more stages of film formation. It is inferred that said fabrication step contributes to development of the liquid impermeability and cloth-like texture. Microscopic observations of the cross section of the laminated sheet reveals that the polyolefin constituting the first polyolefin layer penetrates the non-woven fabric layer only to a shallow depth. Because of such slight penetration, the cloth-like texture of the non-woven fabric layer can be retained in the laminated sheet. Moreover, the second and ensuing polyolefin layer(s) serve to prevent formation of pinholes. All of these effects combined are considered to enhance the liquid impermeability of the laminated sheet.

On the contrary, it has been verified through microscopic observations that in cases where the polyolefin layer having the same thickness is formed on the surface of the non-woven fabric in a one-step extrusion lamination, the molten polyolefin penetrates into the non-woven fabric deeply. The laminated sheet thus obtained becomes stiff and does not retain the cloth-like texture, also shows low hydrostatic head.

### Examples

The present invention will be understood more readily with reference to the following examples; however, these examples are intended to illustrate the present invention and are not to be construed to limit the scope of the invention.

### Example 1

For a non-woven fabric, a spunbonded non-woven fabric having a basis weight of 20 g/m² and a width of 500 mm was formed from 2-denier continuous polypropylene filaments which were fixed by heat spot bonding.

For the polyolefin to form the polyolefin layer, a polyolefin composition consisting of 40 % by weight of ethylene-4-methyle-1-pentene copolymer (density: 0.915 g/cm³; MFR: 20 g/10 min.; MT: 1.8 g ) and 60 % by weight of calcium carbonate was prepared.

Said polyolefin composition was fed to an extruder having a 800 mm-wide flat die and a 65 mm-diameter screw, and was extruded at an temperature underneath the die of 250°C and the extruded polyolefin was coated over the surface of the continuously supplied non-woven fabric. During said operation, the tension applied to the non-woven fabric was 3 kg/m.

Next, the two-layered article was fed into the gap in a pair of rolls having a 900 mm width consisting of a chill roll maintained at a temperature of 20°C and a nip roll and processed at a speed of 50 m/min., and thus was produced a laminate. During the operation the nip pressure was adjusted to 15 kg/cm. The basis weight of the polyolefin layer was 15 g/m².

Thereupon, said laminate was fed to a laminator of the same specifications as mentioned above, and the same polyolefin composition was extrusion laminated onto the polyolefin layer to form a second polyolefin layer with the basis weight controlled to 15 g/m².

Next, the laminate was passed through a gear stretch equipment so as to achieve drawing by 1.6 times in the transverse direction and 1.1 times in the machine direction. The gear stretch equipment had a disk thickness of 0.762 mm, a disk clearance of 0.537 mm, a gear roll diameter of 152 mm, a gear roll width of 350 mm, and a depth of engagement of 3 mm.

Physical properties of the obtained laminated sheet are shown in Table 1.

The number of pinholes as indicated in Table 1 was counted as follows. That is to say, after causing colored water to infiltrate the laminate from the film layer side under a pressure of 50 mm H₂O, the number of spots thereby stained on the non-woven fabric side was counted.

### Comparative Example 1

The same procedure as in Example 1 was followed except that the extrusion lamination was executed so as to control the first polyolefin layer to a basis weight of 30 g/m² and there was not formed a second polyolefin layer as in Example 1. Physical properties of the obtained laminated sheet are shown alongside in Table 1.

### Comparative Examples 2 and 3

A laminated sheet was formed according to the same procedure as followed in Example 1 except that the temperature underneath the die and the nip pressure as applied in Example 1 were changed to the ones indicated in Table 1. Physical properties of the obtained laminated sheet are shown alongside in Table 1.

**Table 1**

| | Example 1 | Compara. Example 1 | Compara. Example 2 | Compara. Example 3 |
|---|---|---|---|---|
| Number of polymeric film layers | 2 | 1 | 2 | 3 |
| Forming conditions | | | | |
| Temp. underneath the die (°C) | 250 | 250 | 285 | 285 |
| Nip pressure (kg/cm) | 15 | 15 | 15 | 24 |
| Physical properties of the laminated sheet | | | | |
| Hydrostatic head (mm H₂O) | >2000 | 50* | 50 | 50 |
| Water vapor Transmission rate (g/m²/24 hr) | 4220 | 1530 ** | *** | *** |
| Nr. of pinholes (N/m²) | 0 | 10 | >20 | >20 |
| Softness of the non-woven side | Good | Not so good | Bad | Bad |
| Loftiness of the non-woven side | Good | Bad | Bad | Bad |

| | | | | |
|---|---|---|---|---|
| * In the area with pinholes | | | | |
| ** In the area without pinholes | | | | |
| *** unable to measure | | | | |

### Example 2

For a non-woven fabric, a spunbonded non-woven fabric having a basis weight of 23 g/m² and a width of 500 mm was formed from 2-denier continuous polypropylene filaments which were fixed by heat spot bonding. This non-woven fabric had an elongation at break of 40 % in the transverse direction and a tensile strength of 3 N/cm in the transverse direction.

For the polyolefin to form the polyolefin layer, a polyolefin composition consisting of ethylene-1-hexene copolymer (density: 0.900 g/cm³; MFR: 9 g/10 min.; MT: 2 g) was prepared. The film which was formed from said polyolefin had a thickness of 55 µm and its elongation at break was 700 % in the transverse direction.

Said polyolefin composition was fed to an extruder having a 800 mm-wide flat die and a 65 mm-diameter screw, and was extruded at an temperature underneath the die of 250°C and the extruded polyolefin was coated over the surface of the continuously supplied non-woven fabric. During said operation, the tension applied to the non-woven fabric was 3 kg/m.

Next, the two-layered article was fed into the gap of a pair of rolls having a 900 mm width consisting of a chill roll maintained at a temperature of 20°C and a nip roll and processed at a speed of 50 m/min., and thus was produced a laminate. During the operation the nip pressure was adjusted to 15 kg/cm. The basis weight of the polyolefin layer was 25 g/m².

Thereupon, said laminate was fed to a laminator of the same specifications as mentioned above, and the same polyolefin composition was extrusion laminated onto the polyolefin layer to form a second polyolefin layer with the basis weight of 30 g/m². Physical properties of the obtained laminated sheet are shown in Table 1.

### Comparative Example 4

A laminated sheet was formed according to the same procedure as followed in Example 1 except that the extrusion lamination was executed so as to make the basis weight of the first polyolefin layer 55 g/m², and there was not formed a second polyolefin layer as in Example 1. Physical properties of the obtained laminated sheet are shown alongside in Table 1.

### Comparative Example 5

A laminated sheet was formed according to the same procedure as followed in Example 1 except that the temperature underneath the die was changed to 285°C. Physical properties of the obtained laminated sheet are shown alongside in Table 1.

**Table 2**

| | Example 3 | Compara. Example 4 | Compara. Example 5 |
|---|---|---|---|
| Number of polymeric film layers | 2 | 1 | 2 |
| Forming Condition | | | |
| Temperature underneath the die (°C) | 250 | 250 | 285 |
| Nip pressure (kg/cm) | 15 | 15 | 15 |
| Physical properties of the laminated sheet | | | |
| Elongation at break (%) | 450 | 70 | 50 |
| Tensile strength (N/cm) | 8.3 | 9.0 | 8.0 |
| Softness of the non-woven side | Good | Bad | Bad |
| Loftiness of the non-woven side | Good | Bad | Bad |

### Effect of the Invention

The laminated sheet produced by the process of the present invention which is comprised of a non-woven fabric layer and polyolefin layers retains cloth-like texture. This laminated film additionally possesses high liquid impermeability and, at the same time, air permeability. The laminated sheet is suitable for liquid impermeable applications for which cloth-like texture is required, particularly for uses as packaging materials and personal hygiene products. Moreover, laminated sheets having such high stretch inherent to the polyolefin may be obtained. Owing to said characteristics it may be utilized as packaging materials or personal hygiene products for which high tensile strength and high elongation are required.

According to the method of the present invention for manufacturing the laminated sheet , the laminated sheet having aforesaid properties may be manufactured at high productivity rates.

## Claims

1. A process of manufacturing a laminated sheet, which comprises of a first step of forming a two-layered laminate by extruding molten polyolefin through a flat die at a temperature underneath the die of 200 to 280 °C onto a surface of a non-woven fabric and passing the two layers through the gap in a pair of rolls consisting of a nip roll and a chill roll under such condition that a nip roll pressure is controlled at 5 to 20 kg/cm so as to integrate the non-woven fabric layer and the polyolefin layer having a basis weight of 5 to 50 g/m² into a two-layered laminate, and a second step of forming a three-layered laminate by extruding the same or a different polyolefin onto the polyolefin layer so that the polyolefin layers have an overall basis weight of 10 to 60 g/m².

2. A process according to claim 1 wherein the non-woven fabric layer has a basis weight of 10 to 60 g/m².

3. A process according to claim 1 or claim 2 wherein the non-woven fabric is (a) a spunbonded non-woven fabric or (b) a laminated non-woven fabric obtainable by combining a spunbonded fabric (a) with a melt-down non-woven fabric.

4. A process according to any one of claims 1 to 3 wherein the non-woven fabric comprises polyolefin.

5. A process according to any one of claims 1 to 4 wherein the non-woven fabric is fed at a tension of 0.1 to 5 kg/m in the machine direction.

6. A process according to any one of claims 1 to 5 wherein both polyolefin layers formed at the first step and the second step are polyethylene layers.

7. A process according to any one of claims 1 to 6 wherein the polyolefin layer formed at the first step comprises polyolefin having a density of 0.870 to 0.935 g/cm³, a melt flow rate of 1 to 90 g/10 min., and a melt tension of 0.5 to 10 g.

8. A process according to any one of claims 1 to 7 wherein the molten polyolefin of the first step comprises ethylene-α-olefin copolymer.

9. A process according to any one of claims 1 to 8 wherein at least one of the polyolefin layers contains inorganic filler.

10. A process according to claim 9 wherein at least one of the polyolefin layers contains 20 to 70% by weight of inorganic filler.

11. A process according to claim 9 or claim 10, wherein the polyolefin layer formed at the first step has a basis weight of 5 to 25 g/m² and the polyolefin layers have an overall basis weight of 10 to 60 g/m².

12. A process for manufacturing a laminated sheet, which comprises drawing a laminate obtainable by the process of any one of claims 9 to 11 by 1.1 to 5 times in at least one direction.

13. A process according to claim 12 wherein the drawing step is executed by feeding the laminate to a gear stretch equipment.

## Patentansprüche

1. Verfahren zur Herstellung einer Verbundfolie, umfassend einen ersten Schritt der Bildung eines zweischichtigen Verbundmaterials durch Extrudieren von geschmolzenem Polyolefin durch eine Breitschlitzdüse bei einer Temperatur unterhalb der Düse von 200 bis 280 °C auf eine Oberfläche eines Faservlies und Führen der beiden Schichten durch den Spalt in einem Walzenpaar, bestehend aus einer Abquetschwalze und einer Auflaufwalze, unter einer solchen Bedingung, dass der Abquetschwalzendruck auf 5 bis 20 kg/cm gesteuert wird, um die Faservliesschicht und die Polyolefinschicht mit einer flächenbezogenen Masse von 5 bis 50 g/m² zu einem zweischichtigen Verbundmaterial zusammenzufügen, und einen zweiten Schritt der Bildung eines dreischichtigen Verbundmaterials durch Extrudieren des gleichen oder eines anderen Polyolefins auf die Polyolefinschicht, so dass die Polyolefinschichten eine flächenbezogene Gesamtmasse von 10 bis 60 g/m² aufweisen.

2. Verfahren gemäß Anspruch 1, worin die Faservliesschicht eine flächenbezogene Masse von 10 bis 60 g/m² besitzt.

3. Verfahren gemäß Anspruch 1 oder 2, worin es sich bei dem Faservlies um (a) ein Spinnvlies oder (b) ein laminiertes Faservlies, das durch Kombinieren eines Spinnvlies (a) mit einem ausgeschmolzenem Faservlies erhältlich ist, handelt.

4. Verfahren gemäß einem der Ansprüche 1 bis 3, worin das Faservlies Polyolefin umfasst.

5. Verfahren gemäß einem der Ansprüche 1 bis 4, worin das Faservlies mit einer Spannung von 0,1 bis 5 kg/m in Maschinenrichtung zugeführt wird.

6. Verfahren gemäß einem der Ansprüche 1 bis 5, worin es sich bei beiden Polyolefinschichten, die in dem ersten Schritt und dem zweiten Schritt gebildet werden, um Polyethylenschichten handelt.

7. Verfahren gemäß einem der Ansprüche 1 bis 6, worin die Polyolefinschicht, die in dem ersten Schritt gebildet wird, Polyolefin umfasst, das eine Dichte von 0,870 bis 0,935 g/cm³, eine Schmelzflussrate von 1 bis 90 g/10 min und eine Schmelzspannung von 0,5 bis 10 g besitzt.

8. Verfahren gemäß einem der Ansprüche 1 bis 7, worin das geschmolzene Polyolefin aus dem ersten Schritt Ethylen-α-Olefin-Copolymer umfasst.

9. Verfahren gemäß einem der Ansprüche 1 bis 8, worin mindestens eine der Polyolefinschichten einen anorganischen Füllstoff enthält.

10. Verfahren gemäß Anspruch 9, worin mindestens eine der Polyolefinschichten 20 bis 70 Gew.-% eines anorganischen Füllstoffs enthält.

11. Verfahren gemäß Anspruch 9 oder Anspruch 10, worin die Polyolefinschicht, die in dem ersten Schritt gebildet wird, eine flächenbezogene Masse von 5 bis 25 g/m² aufweist und die Polyolefinschichten eine flächenbezogene Gesamtmasse von 10 bis 60 g/m² aufweisen.

12. Verfahren zur Herstellung einer Verbundfolie, umfassend das Strecken eines Verbundmaterials, das nach dem Verfahren gemäß einem der Ansprüche 9 bis 11 erhältlich ist, um das 1,1- bis 5-fache in mindestens eine Richtung.

13. Verfahren gemäß Anspruch 12, worin der Streckschritt ausgeführt wird, indem das Verbundmaterial einer Getriebestreckvorrichtung zugeführt wird.

## Revendications

1. Procédé permettant de fabriquer une feuille stratifiée, lequel procédé comporte une première étape consistant à former un stratifié à deux couches en extrudant une polyoléfine fondue, au moyen d'une filière plate sous laquelle il règne une température de 200 à 280 °C, sur une surface de tissu non-tissé, et à faire passer ces deux couches dans l'interstice laissé entre deux rouleaux, un rouleau pinceur et un rouleau refroidisseur, tout en régulant à une valeur de 5 à 20 kg/cm la pression du rouleau pinceur, de manière à réunir en un stratifié à deux couches la couche de tissu non-tissé et une couche de polyoléfine dont le poids surfacique vaut de 5 à 50 g/m², et une deuxième étape consistant à former un stratifié à trois couches en extrudant la même polyoléfine, ou une polyoléfine différente, par-dessus la première couche de polyoléfine, de manière à ce que le poids surfacique total des couches de polyoléfine vaille de 10 à 60 g/m².

2. Procédé conforme à la revendication 1, dans lequel le poids surfacique de la couche de tissu non-tissé vaut de 10 à 60 g/m².

3. Procédé conforme à la revendication 1 ou 2, dans lequel le tissu non-tissé est :
a) un tissu non-tissé de type filé-lié,
b) ou un tissu non-tissé stratifié, obtenu par combinaison d'un tissu de type filé-lié (a) et d'un tissu non-tissé de type fondu-soufflé.

4. Procédé conforme à l'une des revendications 1 à 3, dans lequel le tissu non-tissé contient une polyoléfine.

5. Procédé conforme à l'une des revendications 1 à 4, dans lequel le tissu non-tissé est introduit sous une tension de 0,1 à 5 kg/m dans le sens machine.

6. Procédé conforme à l'une des revendications 1 à 5, dans lequel les deux couches de polyoléfine formées lors de la première étape et de la deuxième étape sont des couches de polyéthylène.

7. Procédé conforme à l'une des revendications 1 à 6, dans lequel la couche de polyoléfine formée lors de la première étape est constituée d'une polyoléfine qui présente une masse volumique de 0,870 à 0,935 g/cm³, un indice de fluidité à chaud de 1 à 90 g/10 min, et une résistance à la traction à l'état fondu de 0,5 à 10 g.

8. Procédé conforme à l'une des revendications 1 à 7, dans lequel la polyoléfine fondue employée lors de la première étape comporte un copolymère d'éthylène et d'alpha-oléfine.

9. Procédé conforme à l'une des revendications 1 à 8, dans lequel au moins l'une des couches de polyoléfine contient une charge inorganique.

10. Procédé conforme à la revendication 9, dans lequel au moins l'une des couches de polyoléfine contient de 20 à 70 % en poids de charge inorganique.

11. Procédé conforme à la revendication 9 ou 10, dans lequel le poids surfacique de la couche de polyoléfine formée lors de la première étape vaut de 5 à 25 g/m², et le poids surfacique total des couches de polyoléfine vaut de 10 à 60 g/m².

12. Procédé de fabrication d'une feuille stratifiée, qui comporte le fait d'étirer dans au moins une direction, avec un facteur d'étirage de 1,1 à 5, un stratifié obtenu selon un procédé conforme à l'une des revendications 9 à 11.

13. Procédé conforme à la revendication 12, dans lequel on effectue l'étape d'étirage en envoyant le stratifié dans un appareil d'étirage à engrenage.
